# FASCICULE DE BREVET EUROPEEN

(11) **EP 0 698 859 B1**
(45) Date de publication et mention de la délivrance du brevet: **03.07.2002**
(21) Numéro de dépôt: 95202119.4
(22) Date de dépôt: 03.08.1995
(51) Int. Cl.: G06K 19/18, G06K 1/12

(54) **Procédé de fabrication d'une carte à puce et carte ainsi obtenue**
Verfahren zur Herstellung von Chipkarten und nach diesem Verfahren hergestellte Karte
Method for manufacturing chip cards and card obtained thereby

(30) Priorité: 25.08.1994 FR 9410360
(43) Date de publication de la demande: 28.02.1996
(73) Titulaire: SCHLUMBERGER Systèmes, 92120 Montrouge (FR)
(72) Inventeur: Monicault, André, F-92140 Clamart (FR)
(74) Mandataire: Lemoyne, Didier

(56) Documents cités:
- EP-A- 0 431 493
- EP-A- 0 580 280
- FR-A- 2 541 978

## Description

La présente invention concerne un procédé de fabrication d'une carte à puce et une carte ainsi obtenue.

Le procédé qui jusqu'à présent est le plus appliqué consiste à préparer un corps de carte en plastique et complété par un module électronique fixé dans une cavité du corps de carte, et d'une impression sur au moins une des faces principales.
Cette impression dépend du matériau du corps de carte et s'effectue normalement par la technique d'impression offset qui même en grande série d'impression est chère.

De plus, on sait que certains vernis d'impression offset appliqués sur des corps de carte en plastique provoquent des problèmes de santé et d'environnement et une pollution des composants dissolvants. De plus la technique d'impression d'offset demande des clichés pour effectuer l'impression en grande série et pour cela ne justifie pas les coûts des petites séries d'impression.

Selon une autre technique de fabrication des cartes à puce décrite dans la demande de brevet français n° 93/02059 (FR-A-2,702,067) déposée en faveur du demandeur le 23 Février 1993, on a proposé un procédé de fabrication où un film muni d'un graphisme pré-imprimé est mis à l'intérieur d'un moule.
Ensuite on injecte un thermo-plastique transparent qui moule le corps de carte en s'attachant quasiment au graphisme. Le module électronique pourrait être mis directement dans le moule ou pourrait être fixé après que le corps de carte soit sorti du moule.

Mais jusqu'à présent les cartes à puce fabriquées selon cette seconde technique n'apparaissent que très rarement sur le marché.

D'autres techniques encore sont décrites dans les documents EP - A2 -0 431 493 et FR - A1 - 2 541 978. Ces documents ont respectivement pour objet une méthode de fabrication d'une carte à circuit intégré ainsi qu'un appareil permettant une telle fabrication et un procédé d'impression de cartes personnalisées utilisant des techniques de reprographies ou d'impression laser.

L'objet de la présente invention est donc de fournir un procédé de fabrication des cartes à puce qui sert à réaliser de telles cartes moins chères même en petites séries et qui évite les problèmes de pollution provoquée par les composants chimiques des vernis d'impression. L'invention a également pour objet une carte à puce.

Dans ce but, le procédé selon l'invention de fabrication d'une carte à puce comprend les étapes suivantes :
(a) une face d'un papier est couverte d'une couche auto-adhésive résistant aux températures élevées, ladite couche auto-adhésive étant protégée par une feuille de protection ;
(b) on introduit le papier préparé selon l'étape(a) dans une machine d'impression électrostatique où on effectue une impression au moins d'un graphisme désiré sur la face principale non-encollée du papier ;
(c) ensuite, la région dudit papier contenant le graphisme est précoupée en forme d'une étiquette à taille prédéfinie ;
(d) on fixe un module électronique contenant une puce électronique dans une cavité d'un corps de carte préfabriqué, et
(e) on sépare la feuille de protection de l'étiquette préparée selon l'étape(c) et on colle l'étiquette sur au moins une des faces principales dudit corps de carte complété selon l'étape (d).

Une carte à puce selon l'invention comprend donc :
un corps de carte, avec deux faces principales dont une contenant un module électronique dans une cavité, laquelle est recouverte à sa périphérie par des plages de contact électrique du module électronique, au moins une des faces principales du corps de carte portant une étiquette, caractérisée en ce que l'étiquette est une étiquette :
   - imprimée selon la technique d'impression électrostatique ;
   - couverte d'une couche auto-adhésive résistant aux températures élevées utilisées pendant l'impression électrostatique ; et
   - collée, au moyen de ladite couche auto-adhésive, audit corps de carte.

Un avantage important du procédé selon l'invention est qu'il permet d'utiliser un corps de carte réalisé avec n'importe quel matériau indépendamment du graphisme ou de la décoration désirés. Le corps de carte est préférabement fabriqué en plastique.

Ces corps de carte peuvent être fabriqués ou usinés en grand nombre et réalisés en grande série, par exemple par la méthode la plus économique possible et mis en stock. Ensuite, au fur et à mesure des besoins le nombre désiré de corps de carte est repris et les cartes complétées par les étiquettes.

Les étiquettes fabriquées selon l'invention sur une machine d'impression électrostatique, préférablement à 4 couleurs et avec des formes numérisées sont rapidement fabriquées en quantités voulues, grandes ou petites.

Le procédé d'impression numérique électrostatique donne également l'avantage de pouvoir modifier très facilement le graphisme même d'une étiquette à l'autre. Les données numériques qui déterminent un graphisme peuvent être créées sur le lieu même de la machine d'impression. électrostatique, ou à distance et transmises à la machine par lignes de télécommunication.

L'invention sera mieux comprise à la lecture de la description qui suit et qui se réfère à des dessins qui illustrent un mode de réalisation préféré de l'invention :
- la figure 1: illustre schématiquement une étape du procédé selon l'invention consistant à mettre une couche adhésive sur un papier en rouleau ;
- la figure 2: illustre les étapes d'impression et de découpage des étiquettes selon l'invention ;
- la figure 3: montre une étiquette fabriquée selon les figures 1 et 2 et prête à être attachée à un corps de carte ;
- la figure 4: montre schématiquement une carte à puce assemblée ;
- la figure 5: montre en coupe une partie de la carte à puce selon l'invention en se référant à la ligne V-V de la figure 4 en échelle agrandie et
- la figure 6: illustre schématiquement en coupe une autre partie de la carte à puce selon l'invention en se référant à la ligne VI-VI de la figure 4.

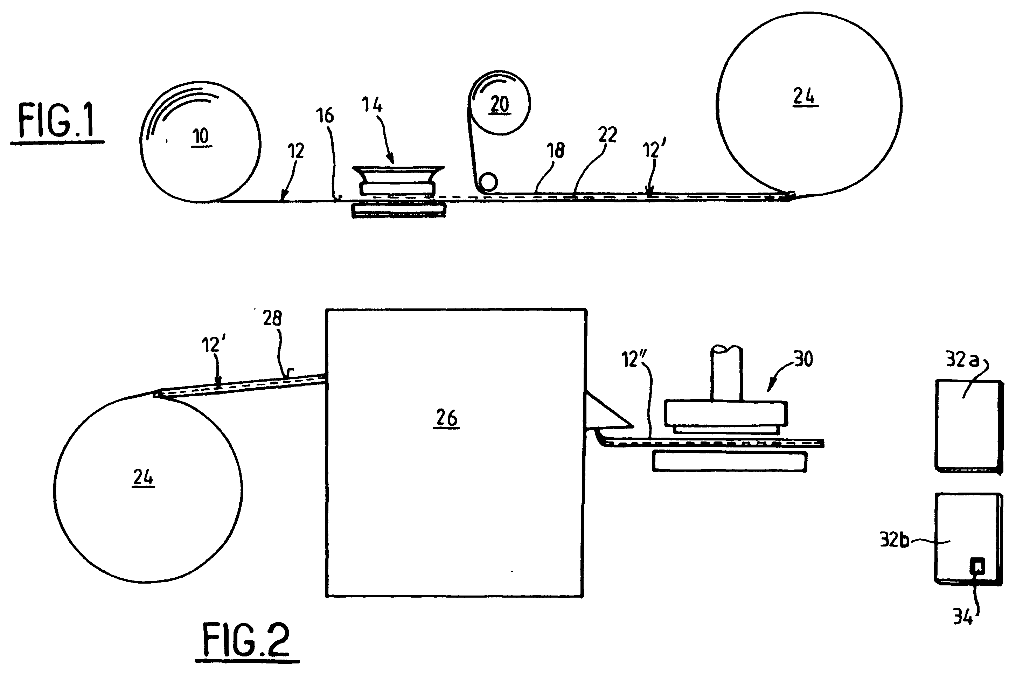

La figure 1 montre un rouleau de papier 10, préférablement d'une largeur servant à recevoir deux à six graphismes. Selon un mode préféré de réalisation de l'invention, le papier 10 est d'une largeur comprise entre 250 et 400 mm et d'un grammage entre 65 et 130 g/mm².

Le papier 12 est entré dans une machine 14 qui encolle une face 16 du papier 12 avec une colle spéciale résistant à des températures comprises entre 90°C et 150° C jusqu'à 24 heures et/ou résistant à des températures entre 100°C et 190° C jusqu'à 1 heure sans détérioration.
La colle peut être une colle d'adhésion permanente à base d'une émulsion aqueuse qui reste sur le papier indécollable sous humidité.

Une feuille de protection 18, préférablement de papier, enroulé sur une bobine 20 est placée sur la couche adhésive 22. Cette dernière est auto-adhésive. Le papier 12' ainsi encollé et protégé est ensuite enroulé sous forme d'une bobine 24. Le papier 12' est prêt à être imprimé.

Bien que sur la figure 1, le papier 12 ou 18 soit montré enroulé sur les bobines 10 et 24, il est évident pour un homme du métier d'utiliser également d'autres formes de papier, par exemple : un papier prédécoupé dans un format standard ou en forme prépliée.

Comme le montre la figure 2, le papier 12' du rouleau 24 est ensuite inséré dans une machine d'impression 26 électrostatique, préférablement à 4 couleurs, où les graphismes à imprimer sur les étiquettes à coller sur les corps de carte sont préalablement numérisés et stockés dans la mémoire de la machine d'impression imprimés dans la machine sur l'autre surface principale 28 (non-encollée) du papier 12'. Les températures d'impression dans une telle machine imprimante électrostatique 26 sont très élevées ; on comprend ainsi la raison pour laquelle la colle 22 doit satisfaire aux conditions thermiques énoncées ci-dessus.

La figure 2 présente aussi schématiquement un ensemble de coupage 30 qui sert à découper les étiquettes 32a et 32b (données à titre d'exemple) du papier 12" imprimé. En principe, et si on utilise un papier 12 qui permet l'impression de 4 graphismes ou étiquettes dans la largeur de la laize, le papier 12" imprimé passe premièrement dans un module de prédécoupe des étiquettes 32a et 32b.

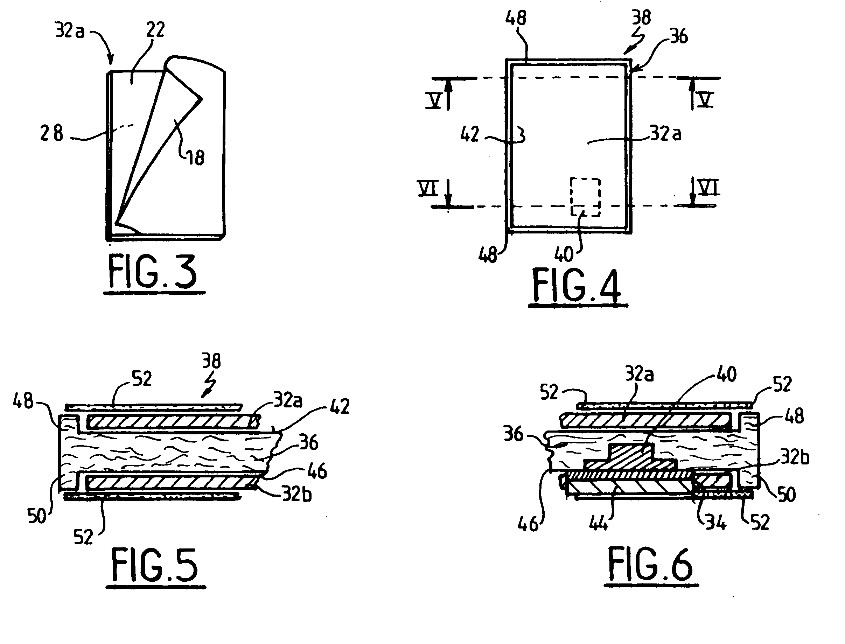

Afin de garantir l'accès aux contacts électriques 44 du module électronique 40 de la carte à puce 38 (voir figure 6) on découpe une ouverture 34 dans lesdites étiquettes 32b qui sont destinées à être collées à la face principale 46 d'un corps de carte qui contient les plages de contact électrique 44.
Après la découpe des étiquettes, le papier ainsi préparé passe dans un module de refente qui le partage en 4 bandes égales.

Il est bien entendu évident que les deux faces principales des cartes à puce peuvent être munies d'étiquettes imprimées selon l'invention. Dans la largeur d'une laize du papier 12", on peut alterner les étiquettes d'une face et de l'autre.

Les étiquettes sont prêtes à être collées aux corps de carte à puce désirés. Cette opération peut être effectuée immédiatement après l'impression ou plus tard. Dans ce cas, les étiquettes sont stockées.

Il est évident que toutes les étapes du procédé peuvent être réalisées au cas où un nombre quelconque d'étiquettes est imprimé dans la largeur de laize du papier 12'.

La figure 3 montre une étiquette 32a dont le papier de protection 18 est entrain d'être détaché afin de libérer la couche adhésive.

Après retournement, l'étiquette 32a de la figure 3 est fixée (figure 4) sur un corps 36 de la carte à puce 38 préfabriquée dont le module électronique est référencé par le chiffre 40. La face principale 42 est couverte d'une étiquette 32a ; les plages de contact électrique 44 du module électronique se trouvent sur la face principale opposée 46 de la carte à puce 38.

La figure 4 montre également que la taille choisie préférablement pour les étiquettes 32 est légèrement plus petite par rapport à celle des faces principales 42, 46, du corps 36 de la carte.

Comme illustré sur la figure 5, chaque face principale 42, 46 comporte des extensions 48, 50 qui bordent la périphérie de chaque face principale en formant un rectangle en relief et en encadrant les étiquettes 32a et 32b. Ces encadrements 48,50 servent à empêcher la séparation des étiquettes 32a, 32b du corps 36 de la carte provoquée par un frottement ou d'autres effets mécaniques inopportuns.

Afin de protéger les graphismes imprimés des étiquettes 32a, 32b on peut les couvrir d'une couche de protection en matériau plastique transparent ou d'une couche de laque ou de vernis de protection. Une telle protection est particulièrement recommandée toujours dans le cas des cartes à puce qui ont une longue durée de vie, les cartes rechargeables par exemple.

La figure 6 représente comme la figure 4 une vue en coupe partielle d'une carte à puce 38 réalisée selon l'invention.

La figure 6 illustre d'une manière plus détaillée comment une étiquette 32b est attachée à la face principale 46 contenant le module électronique 40 avec les plages de contact 44.

Afin de permettre l'accès auxdites plages de contact 44,l'étiquette 32b (voir aussi figure 2) est muni d'une fenêtre ou ouverture 34 par laquelle les plages de contact 44 sont accessibles de l'extérieur.

Comme il ressort clairement de la description ci-dessus, les cartes à puce obtenues selon l'invention se composent d'un corps de carte auquel ont été ajoutés un module électronique et une étiquette que l'on a collée.
Ces corps de carte, d'une longueur de moins de 95 mm, d'une largeur de moins de 60 mm et d'une épaisseur de moins de 0,75 mm, peuvent être préfabriqués par moulage ou découpés à partir d'une plaque en plastique. La cavité apte à recevoir un module électronique peut être obtenue pendant le moulage ou fraisée dans le corps de carte.
Cela présente l'avantage de pouvoir utiliser un matériau plastique coloré pour la fabrication des corps de cartes. Ainsi la couleur du corps de carte reste visible -en regardant les bords de la carte- après l'attachement des étiquettes, ce qui facilite l'identification des différents types de cartes dans un stock.

Il est donc très facile de différencier les différentes sortes de cartes par différentes couleurs des bords des cartes ce qui ne nuit en rien à l'aspect esthétique du graphisme des étiquettes.

## Revendications

1. Procédé de fabrication d'une carte à puce (38), comprenant les étapes suivantes :
(a) une face d'un papier (10, 12) est couverte d'une couche auto-adhésive (22) résistant aux températures élevées, ladite couche auto-adhésive (22) étant protégée par une feuille de protection (18) ;
(b) on introduit le papier (12') préparé selon l'étape(a) dans une machine d'impression (26) électrostatique où on effectue une impression au moins d'un graphisme désiré sur la face principale (28) non-encollée du papier ;
(c) ensuite, la région dudit papier (12'') contenant le graphisme est précoupée en forme d'une étiquette (32a, 32b) à taille prédéfinie ;
(d) on fixe un module électronique (40) contenant une puce électronique dans une cavité d'un corps (36) de carte préfabriqué, et
(e) on sépare la feuille de protection (18) de l'étiquette (32a, 32b) préparée selon l'étape (c) et on colle l'étiquette sur au moins une des faces principales (42, 46) dudit corps (36) de carte complété selon l'étape(d).

2. Procédé selon la revendication 1, **caractérisé en ce qu'**on effectue l'impression selon l'étape(b), dans une machine d'impression (26) numérique à quatre couleurs.

3. Procédé selon une des revendications précédentes **caractérisé en ce que** la couche auto-adhésive (22) appliquée selon l'étape (a), de la revendication 1 consiste en une colle résistant à des températures entre 90°C et 150°C jusqu'à 24 heures et/ou résistant à des températures entre 100°C et 190°C jusqu'à 1 heure sans détérioration.

4. Procédé selon une des revendications 2 ou 3 **caractérisé en ce que** la couche auto-adhésive (22) appliquée selon l'étape (a) de la revendication 1 consiste en une colle d'adhésion permanente à base d'une émulsion aqueuse qui reste sur le papier indécollable sous humidité.

5. Procédé selon une quelconque des précédentes revendications **caractérisé en ce qu'**on utilise un papier (10) en rouleau avec une largeur qui permet l'application de plusieurs étiquettes (32a, 32b) selon un arrangement déterminé.

6. Procédé selon la revendication 5 **caractérisé en ce qu'**on utilise un papier (10) d'une largeur entre 250 et 400 mm et d'un grammage entre 65 et 130 g/m².

7. Procédé selon une quelconque des revendication précédentes **caractérisé en ce qu'**après l'étape (e) de la revendication 1, on couvre l'étiquette (32a, 32b) appliquée sur le corps (36) de la carte à puce (38) par une couche de laque ou de vernis (52) de protection.

8. Carte à puce (38) comprenant un corps (36) de carte, avec deux faces principales (42, 46) dont une contenant un module électronique (40) dans une cavité laquelle est recouverte à sa périphérie par des plages de contact (44) électrique du module électronique (40), au moins une des faces principales du corps (36) de carte portant une étiquette (32a, 32b), **caractérisé en ce que** l'étiquette (32a, 32b) est une étiquette :
- imprimée selon la technique d'impression électrostatique ;
- couverte d'une couche auto-adhésive (22) résistant aux températures élevées utilisées pendant l'impression électrostatique ; et
- collée, au moyen de ladite couche auto-adhésive (22) audit corps (36) de carte.

9. Carte à puce (38) selon la revendication 8 **caractérisé en ce que** le corps (36) de carte à puce (38) est préfabriqué et complété avec le module électronique (40) avant que l'étiquette (32a, 32b) ne soit appliquée.

10. Carte à puce (38) selon une des revendications 8 ou 9 **caractérisée en ce que** le corps (36) de carte est moulé.

11. Carte à puce (38) selon une des revendications 8 ou 9 **caractérisée en ce que** le corps (36) de carte est coupé à partir d'un ensemble de plusieurs corps (36) de carte préfabriqués ou coupé à partir d'une planche en plastique.

12. Carte à puce (38) selon une des revendications 8, 9, 10 ou 11 **caractérisée en ce que** le corps (36) de carte se présente selon les dimensions suivantes : d'une longueur de moins de 95 mm, d'une largeur de moins de 60 mm et d'une épaisseur de moins de 0,75 mm.

## Patentansprüche

1. Verfahren zur Herstellung einer Chipkarte (38), welches aus folgenden Schritten besteht:
(a) eine Papierseite (10, 12) wird mit einer hohen Temperaturen widerstehenden, selbstklebenden Schicht (22) bedeckt, wobei besagte selbstklebende Schicht (22) mit einem Schutzblatt (18) geschützt wird;
(b) das gemäss Schritt (a) vorbereitete Papier (12') wird in eine elektrostatische Druckmaschine (26) eingeführt und mit mindestens einer gewünschten Grafik auf der nicht aufgeklebten Hauptfläche (28) des Papiers bedruckt;
(c) anschließend wird der Bereich des besagten Papiers (12") mit der Grafik wie ein Etikett (32a, 32b) mit vorgegebener Größe zugeschnitten;
(d) man fixiert ein elektronisches Modul (40), welches einen elektronischen Chip enthält, in einem Hohlraum eines vorgefertigten Kartenkörpers (36); und
(e) man trennt das Schutzblatt (18) vom gemäss Schritt (c) vorbereiteten Etikett (32a, 32b) und klebt das Etikett auf mindestens eine der Hauptflächen (42, 46) des gemäss Schritt (d) vervollständigten besagten Kartenkörpers (36).

2. Verfahren gemäss einem der Patentansprüche 1 oder 2, **dadurch gekennzeichnet, dass** der Druck gemäss Schritt (b) in einer vierfarbigen digitalen Druckmaschine (26) ausgeführt wird.

3. Verfahren gemäss Patentanspruch 1, **dadurch gekennzeichnet, dass** die gemäss Schritt (a) aufgetragene selbstklebende Schicht (22) von Patentanspruch 1 aus einem Kleber besteht, welcher bis zu 24 Stunden hohen Temperaturen von 90°C bis 150°C und/oder bis zu 1 Stunde Temperaturen von 100°C bis 190°C ohne Schaden widerstehen kann.

4. Verfahren gemäss einem der Patentansprüche 2 oder 3, **dadurch gekennzeichnet, dass** die gemäss Schritt (a) aufgetragene selbstklebende Schicht (22) des Patentanspruchs 1 aus einem permanenten Haftkleber auf Basis einer wässrigen Emulsion besteht, welche sich unter Einwirkung von Feuchtigkeit nicht vom Papier löst.

5. Verfahren gemäss einem beliebigen vorhergehenden Patentanspruch, **dadurch gekennzeichnet, dass** man eine Rolle Papier (10) mit einer Breite, welche das Aufbringen mehrerer Etiketten (32a, 32b) gemäss einer vorgegebenen Anordnung ermöglicht, verwendet.

6. Verfahren gemäss Patentanspruch 5, **dadurch gekennzeichnet, dass** man ein Papier (10) mit einer Breite von 250 bis 400 mm und einer Flächenmasse von 65 bis 130 g/m² verwendet.

7. Verfahren gemäss einem beliebigen vorstehenden Patentanspruch, **dadurch gekennzeichnet, dass** nach dem Schritt (e) von Patentanspruch 1 das auf dem Kartenkörper (36) der Chipkarte (38) aufgebrachte Etikett (32a, 32b) mit einer Lack- oder Firnisschicht (52) zum Schutz bedeckt wird.

8. Chipkarte (38), bestehend aus einem Kartenkörper (36) mit zwei Hauptflächen (42, 46), wovon eine ein elektronisches Modul (40) in einem Hohlraum enthält, welcher an seinem Umkreis mit elektrischen Kontaktplatten (44) des elektronischen Moduls (40) bestückt ist, wobei mindestens eine der Hauptflächen des Kartenkörpers (36) ein Etikett (32a, 32b) trägt und **dadurch gekennzeichnet ist, dass** das Etikett (32a, 32b) ein Etikett ist, welches:
- gemäss der elektrostatischen Drucktechnik bedruckt ist;
- mit einer selbstklebenden Schicht (22) bedeckt ist, die den während dem elektrostatischen Druck angewandten hohen Temperaturen widerstehen kann; und
- mittels besagter selbstklebender Schicht (22) auf den besagten Kartenkörper (36) geklebt ist.

9. Chipkarte (38) gemäss Patentanspruch 8, **dadurch gekennzeichnet, dass** der Körper (36) der Chipkarte (38) vorgefertigt ist und mit dem elektronischen Modul (40) vor dem Aufbringen des Etiketts (32a, 32b) vervollständigt wird.

10. Chipkarte (38) gemäss einem der Patentansprüche 8 oder 9, **dadurch gekennzeichnet, dass** der Kartenkörper (36) formgepresst ist.

11. Chipkarte (38) gemäss einem der Patentansprüche 8 oder 9, **dadurch gekennzeichnet, dass** der Kartenkörper (36) aus einer Einheit aus mehreren vorgefertigten Kartenkörpern (36) oder einer Kunststoffplatte zugeschnitten wird.

12. Chipkarte (38) gemäss einem der Patentansprüche 8, 9, 10 oder 11, **dadurch gekennzeichnet, dass** der Kartenkörper (36) in folgenden Abmessungen ausgeführt ist: eine Länge von 95 mm maximal, eine Breite von 60 mm maximal und eine Dicke von 0,75 mm maximal.

## Claims

1. Method to manufacture a smartcard (38), including the following steps:
(a) one side of a sheet of paper (10, 12) is covered with a self-adhesive layer (22) resistant to high temperatures, the said self-adhesive layer (22) being protected by a protective film (18);
(b) the paper (12') prepared according to step (a) is inserted in an electrostatic printing machine (26) where at least one desired graphic is printed on the main non-glued side (28) of the paper;
(c) then, the area of the said paper (12") containing the graphic is precut in the form of a label (32a, 32b) to a predefined size.
(d) an electronic module (40) containing an electronic chip is fixed in a recess of a prefabricated card body (36), and
(e) the protective film (18) is separated from the label (32a, 32b) prepared according to step (c) and the label is stuck on at least one of the main sides (42, 46) of the said card body (36) completed according to step (d).

2. Method according to claim 1, **characterised in that** the printing according to step (b) is carried out in a digital four-colour printing machine (26).

3. Method according to one of the previous claims, **characterised in that** the self-adhesive layer (22) applied according to step (a) of claim 1 consists of an adhesive resistant to temperatures between 90°C and 150°C up to 24 hours and/or resistant to temperatures between 100°C and 190°C up to 1 hour without deterioration.

4. Method according to claim 2 or 3, **characterised in that** the self-adhesive layer (22) applied according to step (a) of claim 1 consists of an aqueous emulsion-based permanent adhesion adhesive which cannot come unstuck from the paper under the effect of humidity.

5. Method according to any of the previous claims, **characterised in that** paper (10) on roll is used of width allowing the application of several labels (32a, 32b) in a defined arrangement.

6. Method according to claim 5, **characterised in that** paper (10) is used of width between 250 and 400 mm and weight between 65 and 130 g/m².

7. Method according to any of the previous claims, **characterised in that** after step (e) of claim 1, the label (32a, 32b) applied on the body (36) of the smartcard (38) is covered by a protective layer of lacquer or varnish (52).

8. Smartcard (38) including a card body (36), with two main sides (42, 46), one of them containing an electronic module (40) in a recess which is covered around the outside by electrical contact pads (44) of the electronic module (40), at least one of the main sides of the card body (36) bearing a label (32a, 32b), **characterised in that** the label (32a, 32b) is a label which is:
- printed according to the electrostatic printing technique;
- covered with a self-adhesive layer (22) resistant to the high temperatures used during the electrostatic printing; and
- glued, using the said self-adhesive layer (22), to the said card body (36).

9. Smartcard (38) according to claim 8, **characterised in that** the body (36) of the smartcard (38) is prefabricated and completed with the electronic module (40) before the label (32a, 32b) is applied.

10. Smartcard (38) according to claim 8 or 9, **characterised in that** the card body (36) is moulded.

11. Smartcard (38) according to claim 8 or 9, **characterised in that** the card body (36) is cut from an assembly of several prefabricated card bodies (36) or cut from a plastic sheet.

12. Smartcard (38) according to claim 8, 9, 10 or 11, **characterised in that** the card body (36) has the following dimensions: length less than 95 mm, width less than 60 mm and thickness less than 0.75 mm.
